# EUROPEAN PATENT SPECIFICATION

(11) **EP 2 060 817 B1**
(45) Date of publication and mention of the grant of the patent: **23.12.2009**
(21) Application number: 08253716.8
(22) Date of filing: 13.11.2008
(51) Int. Cl.: F16D 27/00

(54) **Clutch drive device and vehicle equipped therewith**
Kupplungsantriebsvorrichtung und damit ausgerüstetes Fahrzeug
Dispositif à commande d'embrayage et véhicule doté de celui-ci

(30) Priority: 15.11.2007 JP 2007296468
(43) Date of publication of application: 20.05.2009
(73) Proprietor: Yamaha Hatsudoki Kabushiki Kaisha, Iwata-shi, Shizuoka 438-8501 (JP)
(72) Inventor: Ishida, Yousuke, Iawata-shi Shizuoka-ken 438-8901 (JP)
(74) Representative: Harris, Ian Richard

(56) References cited:
- EP-A- 1 348 880
- JP-A- 2005 326 018
- US-A- 5 984 072
- US-A1- 2006 169 569

## Description

### Technical Field

The present invention relates to a clutch drive device that drives a clutch using a drive force of an actuator and a vehicle including the clutch drive device.

### Background Art

There is conventionally known a clutch operation assisting device using an urge force such as a spring force as a device for assisting in manual clutch engagement/disengagement operation (see, for example, Japanese Unexamined Patent Application Publication No. 2005-326018). The clutch operation assisting device described in Japanese Unexamined Patent Application Publication No. 2005-326018 interposes between a clutch lever and a clutch and reduces a rider's clutch lever operation force.

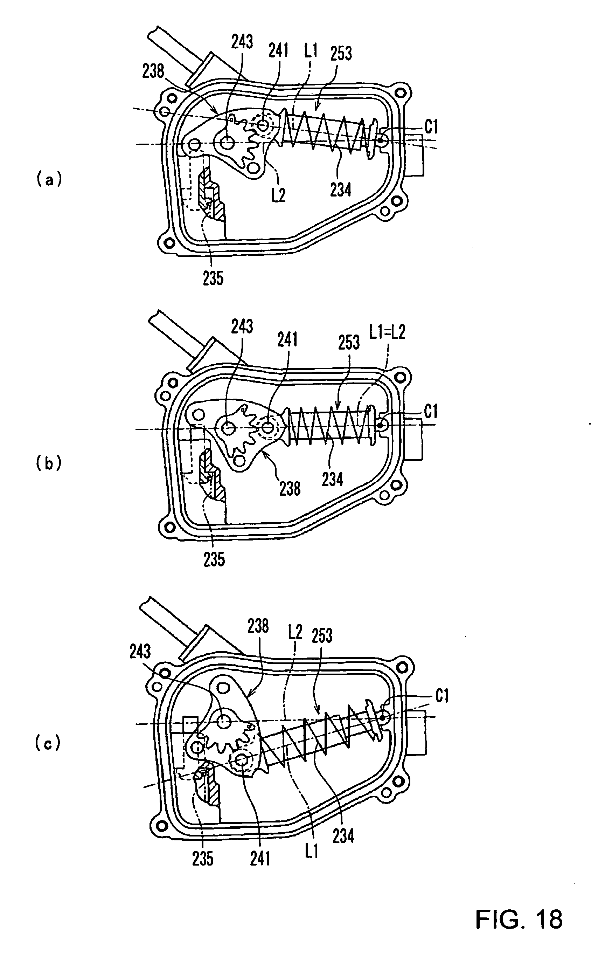

As shown in Fig. 18(a), the clutch operation assisting device described in the Japanese Unexamined Patent Application Publication No. 2005-326018 includes a compression coil spring 234 and a spring holder 253 that supports the compression coil spring 234 and expands or compresses in a longitudinal direction according to the compression coil spring 234. A root of the spring holder 253 is formed to pivot about a support point C1 and a tip end of the spring holder 253 is connected to a lever 238 via a connection pin 241. The lever 238 is arranged in an operation force transmission system between the clutch lever and the clutch and rotates about a spindle 243. In Figs. 18 (a) to 18(c), if the clutch lever is operated in a direction of disengaging the clutch, the lever 238 rotates clockwise. If the clutch lever is operated in a direction of engaging the clutch, the lever 238 rotates counterclockwise.

Meanwhile, a so-called allowance area in which a load from the clutch (hereinafter, "clutch load") is not applied to the clutch lever even if the rider grips the clutch lever is provided in the clutch. In the allowance area, even if the rider grips the clutch lever, the clutch is not disengaged. A position where the clutch starts to be disengaged is called "meet point" (that is, "disengagement start position"). After the lever 238 exceeds the meet point, the clutch load is applied to the clutch lever. Accordingly, in the clutch operation assisting device, the assisting force of the compression coil spring 234 is zero at the meet point and acts in the direction of disengaging the clutch while the clutch lever is operated in the direction of disengaging the clutch after the lever exceeds the meet point.

Specifically, as shown in Fig. 18 (b), at the meet point, a line L1 connecting the pivotal support point C1 of the spring holder 253 and a center of the connection pin 241 coincides with a line L2 connecting the pivotal support point C1 to a center of rotation of the lever 238 (that is, a center of the spindle 243). Due to this, the assisting force of the compression coil spring 234 is zero. As shown in Fig. 18(c), while the lever 238 exceeds the meet point and moves toward the clutch disengagement side, the line L1 moves downward of the line L2 and the urge force of the compression coil spring 234 acts as an assisting force for rotating the lever 238 clockwise (that is, in the direction of disengaging the clutch).

On the other hand, as shown in Fig. 18(a), in the allowance area, the line L1 deviates upward of the line L2 and the urge force of the compression coil spring 234 acts in the direction of rotating the lever 238 counterclockwise, that is, in the direction of engaging the clutch. Due to this, the urge force of the compression coil spring 234 acts as a force for applying a load to the rider who grips the clutch lever (hereinafter, "reverse assisting force") in the allowance area. Therefore, a canceling compression coil spring 235 that applies an urge force to the lever 238 located in the allowance area is separately provided in the clutch operation assisting device so as to cancel the reverse assisting force.

As can be seen, the clutch operation assisting device is a device for assisting in the rider's manual clutch operation. On the other hand, there is known a device for performing clutch disengagement and engagement operations using an actuator such as an electric motor (hereinafter, "clutch drive device"). There is also known a clutch drive device including a compression coil spring that generates the assisting force in order to lessen a load on the actuator (see, for example, Japanese Unexamined Patent Application Publication No. 2007-69638).

However, the clutch drive device including the compression coil spring similarly generates a reverse assisting force caused by the compression coil spring in an allowance area. Due to this, in the allowance area, an unnecessarily excessive load is applied to the actuator. To lessen the load on the actuator, therefore, it is proposed to separately provide a canceling compression coil spring in the clutch drive device.

However, to separately provide the canceling compression coil spring in the clutch drive device disadvantageously entails an increase in the number of components, a complicated structure, and a cost increase.

The present invention seeks to provide a clutch drive device capable of suppressing a reverse assisting force in an allowance area even without a canceling compression coil spring.

### Summary

A clutch drive device according to the present invention includes: a clutch; an actuator that generates a drive force for engaging or disengaging the clutch; an actuation force transmission mechanism including a solid of revolution rotating in a first direction when the clutch is disengaged and rotating in a second direction when the clutch is engaged, the actuation force transmission mechanism transmitting the drive force of the actuator to the clutch to follow rotation of the solid of revolution; and an auxiliary elastic body having one end pivotally supported and the other end abutting on the solid of revolution, the auxiliary elastic body urging the solid of revolution in a direction of disengaging the clutch while a state of the clutch further changes to a disengagement state after the clutch starts to be disengaged. An abutment structure in which the solid of revolution abuts on the auxiliary elastic body is configured so that an urge force of the auxiliary elastic body does not act in a direction of rotating the solid of revolution at least at one position in an allowance area in which the clutch is not disengaged even if the solid of revolution rotates.

In the clutch drive device, the auxiliary elastic body and the solid of revolution are not connected to each other by a pin, like the conventional technique, but abut on each other so that the urge force of the auxiliary elastic body does not act in the direction of rotating the solid of revolution at least at one position in the allowance area. Due to this, as compared with the conventional technique with which the reverse assisting force is generated in the entire allowance area, the reverse assisting force can be reduced in the allowance area in average. It is, therefore, possible to lessen the load on the actuator even without providing the canceling compression coil spring. The clutch is disengaged by the actuator. Due to this, unlike a vehicle in which the clutch is disengaged using a clutch lever or the like, the problem of impairing rider's operation feeling does not occur. Therefore, even if the above-stated structure is provided in the allowance area, no problem occurs practically.

In an embodiment of the present invention, the clutch drive device can suppress the reverse assisting force in the allowance area even without providing a canceling compression coil spring.

### Brief Description of the Drawings

Embodiments of the present invention will be described hereinafter, by way of example only, with reference to the accompanying drawings.
Fig. 1 is a side view of a motorcycle.
Fig. 2 is a perspective view of automatic transmission operating switches.
Fig. 3 is a side view of a power unit.
Fig. 4 is a side view of the power unit in a state of being uncovered.
Fig. 5 is a partially cutout plan view of the power unit.
Fig. 6 is a pattern diagram showing main constituent elements of the power unit.
Fig. 7 (a) is a side view of an actuation force transmission mechanism in a clutch engagement state and Fig. 7 (b) is a pattern diagram showing positions of balls of a ball cam in the clutch engagement state.
Fig. 8 is a cross-sectional view of a first solid of revolution.
Fig. 9 is a cross-sectional view of a second solid of revolution.
Fig. 10 is a cross-sectional view of the ball cam in the clutch engagement state.
Fig. 11(a) is a side view of the actuation force transmission mechanism when the clutch is located at a disengagement start position and Fig. 11 (b) is a pattern diagram showing positions of the balls of the ball cam when the clutch is at the disengagement start position.
Fig. 12(a) is a side view of the actuation force transmission mechanism in a clutch disengagement state and Fig. 12(b) is a pattern diagram showing positions of the balls of the ball cam in the clutch disengagement state.
Fig. 13 is a cross-sectional view of the ball cam in the clutch disengagement state.
Figs. 14 (a) to 14 (d) are front views showing an abutment structure in which the first solid of revolution abuts on an assist spring unit.
Fig. 15 is a chart showing a change in an assisting force of the assist spring unit.
Figs. 16(a) to 16(c) are front views showing an abutment structure in which a first solid of revolution abuts on an assist spring unit according to a second embodiment of the present invention.
Figs. 17 (a) to 17 (c) are front views showing an abutment structure in which a first solid of revolution abuts on an assist spring unit according to a third embodiment of the present invention.
Figs. 18(a) to 18(c) are configuration diagrams of a conventional clutch operation assisting device.

### Detailed Description

Embodiments of the present invention will be described hereinafter in detail with reference to the accompanying drawings.

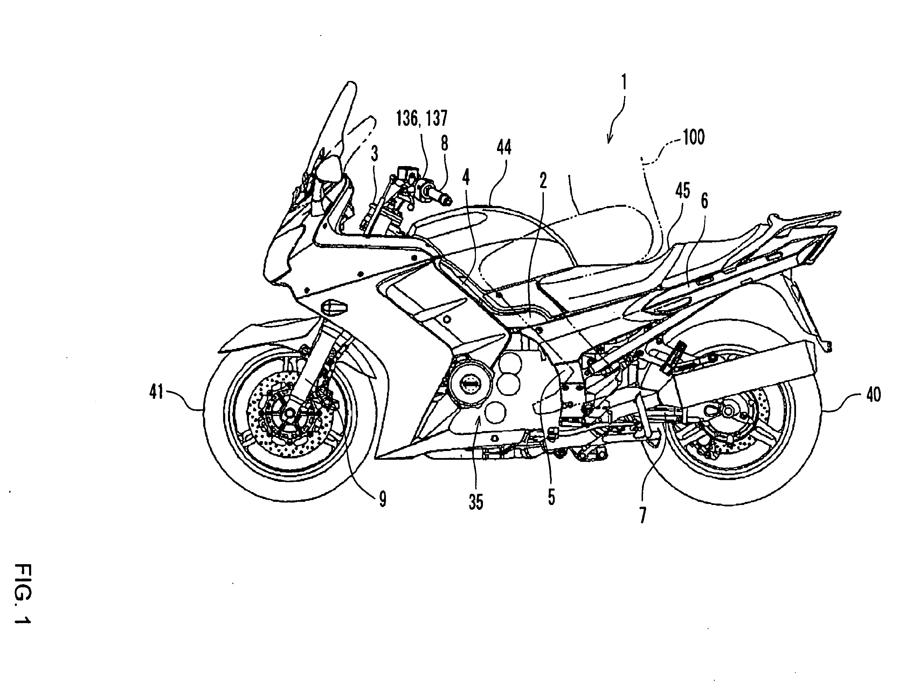

Fig. 1 is a side view showing an example of a motorcycle 1 according to a first embodiment of the present invention. In the example shown in Fig. 1, the motorcycle 1 of the embodiment includes a body frame2. The body frame 2 includes a head pipe 3, a main frame 4 extending rearward of the head pipe 3, and a rear arm bracket 5 extending downward of a rear portion of the main frame 4.

A front fork 9 is supported on the head pipe 3. A steering handle 8 is provided on an upper end of the front fork 9 and a front wheel 41 is provided on a lower end thereof. A fuel tank 44 is arranged in an upper portion of the main frame 4 and a seat 45 is arranged in rear of the fuel tank 44. The seat 45 is mounted on a seat rail 6. A power unit 35 is suspended on the main frame 4 and the rear arm bracket 5. A front end of a rear arm 7 is vertically pivotally supported on the rear arm bracket 5. A rear wheel 40 is supported on a rear end of the rear arm 7.

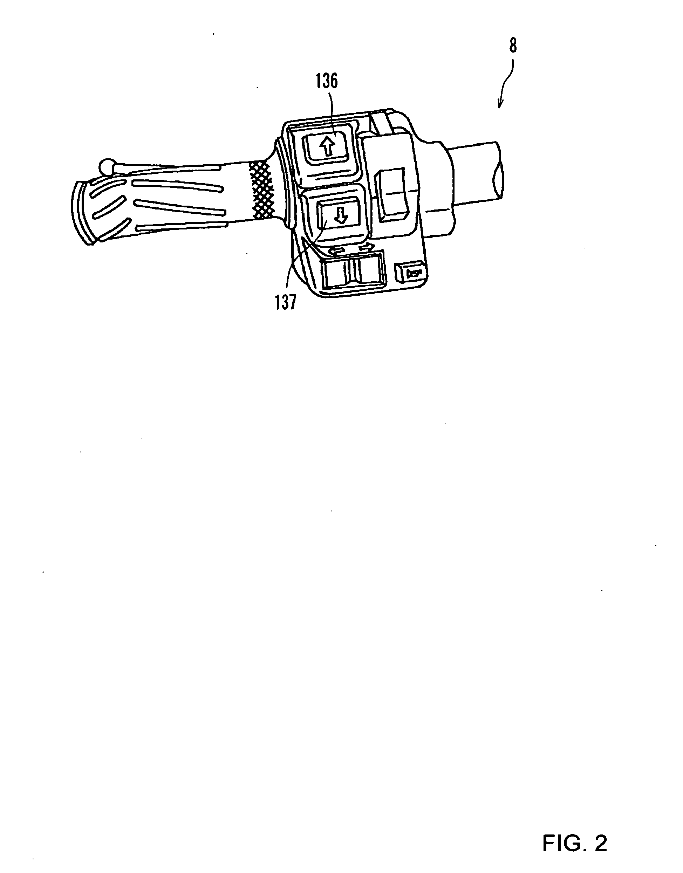

The steering handle 8 includes automatic transmission operating switches 136 and 137 operated by a rider 100 who sits astride the seat 45 (see Fig. 2).

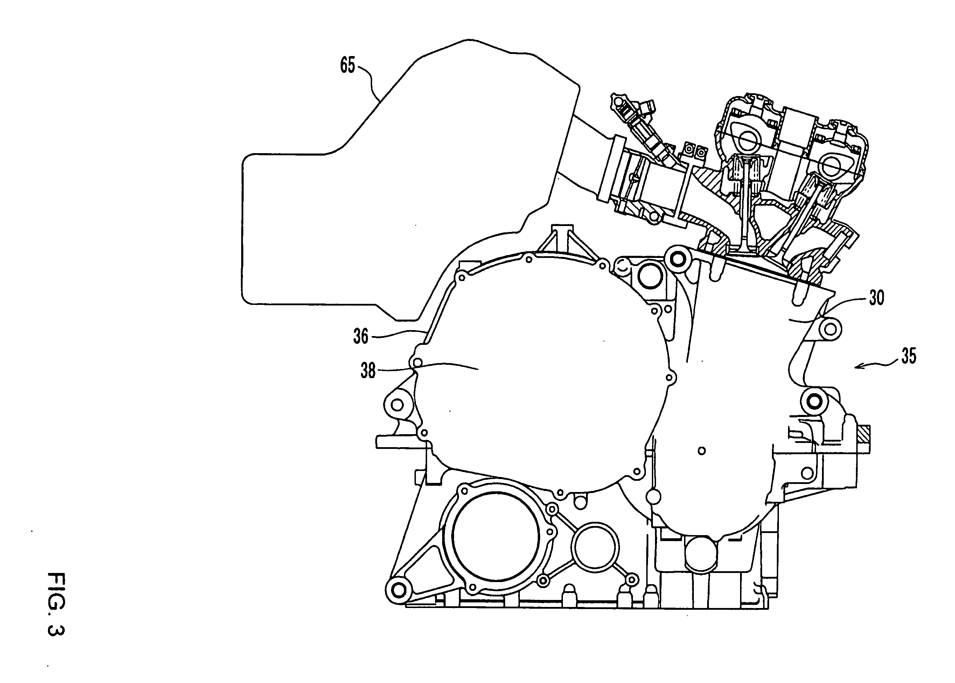

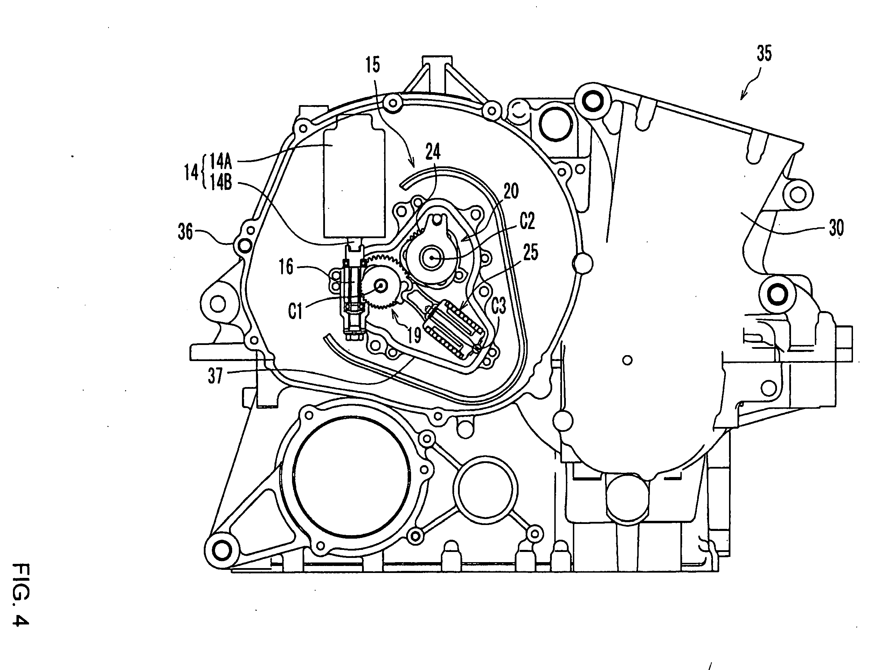

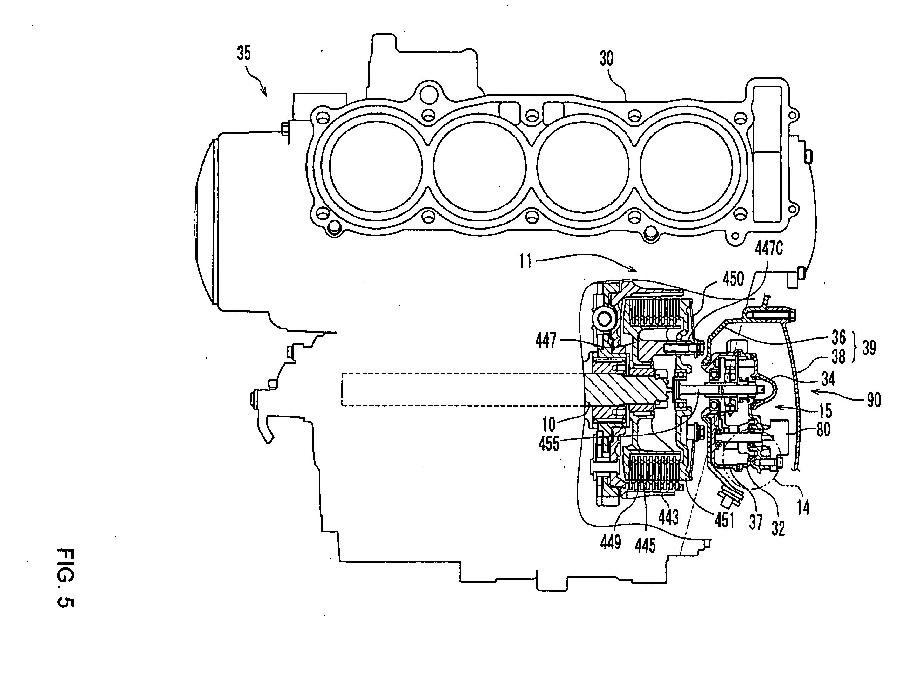

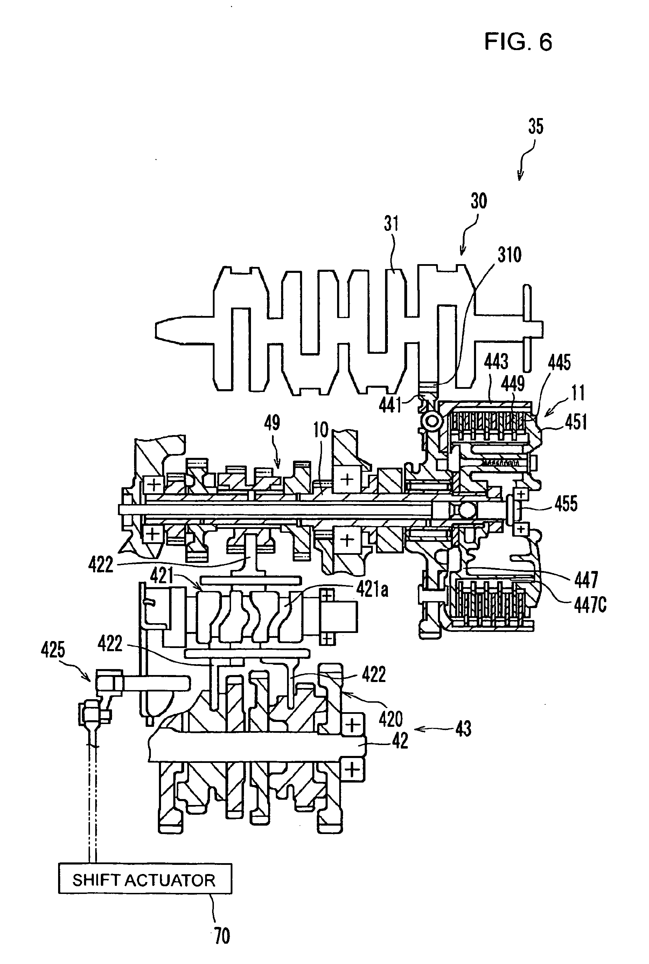

Fig. 3 is a right side view of the power unit 35. In Fig. 3, reference symbol 65 denotes an air cleaner. Fig. 4 is a right side view of main constituent elements of the power unit 35 in a state in which a cover 38 and a case cover 32 (see Fig. 5) are removed. Fig. 5 is a partially cutout plan view of the power unit 35. Fig. 6 is a pattern diagram showing an internal configuration of the power unit 35. As shown in Fig. 6, the power unit 35 includes an engine 30, a clutch 11, and a transmission 43. The power unit 35 also includes a clutch actuator 14 (see Fig. 4) for engaging and disengaging the clutch 11 and a shift actuator 70 for actuating the transmission 43.

Although the engine 30 is not limited to a specific type, the engine 30 is a water-cooled, four-stroke cycle, transverse four-cylinder engine in the present example. However, the engine 30 is not limited to an internal-combustion engine such as a gasoline engine but may be another type of engine such as a motor (e.g., and electric motor) engine. Alternatively, the engine 30 may be a combination of a gasoline engine and a motor engine. The engine 30 includes a crankshaft 31 extending in a crosswise direction. A gear 310 is formed on the crankshaft 31.

As shown in Fig. 6, the clutch 11 according to the first embodiment is a multiplate friction clutch although not being limited thereto. The clutch 11 includes a clutch housing 443, a plurality of friction plates 445 formed integrally with the clutch housing 443, a clutch boss 447, a plurality of clutch plates 449 formed integrally with the clutch boss 447, and a pressure plate 451 that pressure-bonds the friction plates 445 to the clutch plates 449.

A gear 441 rotatable about a main shaft 10 is supported on the main shaft 10. This gear 441 is engaged with the gear 310 of the crankshaft 31. The clutch housing 443 is fixed to the gear 441 and rotates integrally with the gear 441. Due to this, torque is transmitted to the clutch housing 443 from the crankshaft 31 via the gear 441.

As shown in Fig. 5, a plurality of cylindrical guide units 447C provided integrally with the cylindrical clutch boss 447 and extending in an axial direction of the main shaft 10 are arranged inside the clutch boss 447. A spring 450 that is a plate spring is attached to the guide units 447C. The spring 450 urges the pressure plate 451 to a left side of Fig. 5. That is, the spring 450 urges the pressure plate 451 in a direction of engaging the clutch 11.

As will be described later in detail, the pressure plate 451 is driven by a clutch actuator 14 to move in an axial direction of a slide shaft 455. At the time of engaging the clutch 11, the slide shaft 455 moves to the left side of Fig. 5 and the pressure plate 451 similarly moves to the left side of Fig. 5. As a result, the pressure plate 451 having received the urge force of the spring 450 pressure-bonds the friction plates 445 to the clutch plates 449. A friction force is thereby generated between the friction plates 445 and the clutch plates 449, thus turning into a state in which a drive force is transmitted from the clutch housing 443 to the clutch boss 447.

On the other hand, at the time of disengaging the clutch 11, the slide shaft 455 moves to a right side of Fig. 5 and the pressure plate 451 also moves to the right side of Fig. 5 against the urge force of the spring 450. As a result, the pressure-bonding state in which the friction plates 445 are pressure-bonded to the clutch plates 449 is released. The clutch 11 thereby turns into a state in which the drive force is not transmitted from the clutch housing 443 to the clutch boss 447.

In this way, the pressure plate 451 moves to either one side or the other side in the axial direction of the main shaft 10 depending on magnitudes of the drive force of the clutch actuator 14 and the urge force of the spring 450, and the clutch 11 turns into an engagement state or a disengagement state according to the movement of the pressure plate 451.

As shown in Fig. 6, the transmission 43 includes the main shaft 10 arranged in parallel to the crankshaft 31 of the engine 30 and a drive shaft 42 arranged in parallel to the main shaft 10. A plurality of transmission gears 49 are provided on the main shaft 10. Likewise, a plurality of transmission gears 420 are provided on the drive shaft 42. The transmission gears 49 on the main shaft 10 are engaged with the transmission gears 420 on the drive shaft 42, respectively. Fig. 6 shows that the transmission gears 49 are separated from the transmission gears 420. The transmission gears 49 and/or 420 other than a pair of selected transmission gears 49 and 420 are attached to the main shaft 10 or the drive shaft 42 in an idling state (that is, "run-idle state"). Accordingly, the torque from the main shaft 10 to the drive shaft 42 is transmitted only via a pair of selected transmission gears.

A gear change operation for selecting a pair of transmission gears 49 and 420 and changing a transmission gear ratio is performed by rotation of a shift cam 421. The shift cam 421 includes a plurality of cam grooves 421a and shift forks 422 are attached to the cam grooves 421a, respectively. Each of the shift forks 422 is engaged with a predetermined pair of transmission gears 49 and 420 of the main shaft 10 and the drive shaft 42. If the shift cam 421 rotates, then the shift forks 422 are guided by the corresponding cam grooves 421a to move in both axial directions, and only a pair of transmission gears 49 and 420 at a position according to a rotational angle of the shift cam 421 is fixed to the main shaft 10 and the drive shaft 42 by a spline. As a result, a transmission gear position is decided, thereby transmitting the torque between the main shaft 10 and the drive shaft 42 via the pair of selected transmission gears 49 and 420 at a predetermined transmission gear ratio.

A shift actuator 70 is connected to the shift cam 421 via a connection mechanism 425. The type of the shift actuator 70 is not limited to a specific type and an electric motor or the like, for example, can be suitably used as the shift actuator 70. The shift actuator 70 rotates the shift cam 421 via the connection mechanism 425 to perform the gear change operation.

The clutch actuator 14 that generates a drive force for engaging or disengaging the clutch 11 and an actuation force transmission mechanism 15 that transmits the drive force of the clutch actuator 14 will next be described.

As shown in Figs. 4 and 5, the clutch actuator 14 and the actuation force transmission mechanism 15 are arranged inside a casing 39 of the power unit 35. More specifically, as shown in Fig. 5, the casing 39 of the power unit 35 includes a crankcase 36 accommodating the crankshaft 31 and the clutch 11 and a cover 38 covering up a right end of a part of the crankcase 36. The clutch actuator 14 and the actuation force transmission mechanism 15 are arranged outside of the crankcase 36 and inside of the cover 38. In other words, the clutch actuator 14 and the actuation force transmission mechanism 15 are covered with the cover 38 outside of the crankcase 36.

The clutch actuator 14 and the actuation force transmission mechanism 15 are arranged on crosswise one end in the casing 39. Although the clutch actuator 14 and the actuation force transmission mechanism 15 can be arranged on a left end or a right end in the casing 39, the clutch actuator 14 and the actuation force transmission mechanism 15 are arranged on the right end in the casing 39 in the first embodiment. Furthermore, in the first embodiment, the clutch actuator 14 and the actuation force transmission mechanism 15 are arranged on a side on which the clutch 11 is arranged in a crosswise direction. However, the clutch actuator 14 and the actuation force transmission mechanism 15 can be arranged on an opposite side to the side on which the clutch 11 is arranged in the crosswise direction.

As shown in Fig. 4, the clutch actuator 14 according to the first embodiment is constituted by an electric motor. The clutch actuator 14 includes a substantially cylindrical motor body 14A and a drive shaft 14B projecting downward of the motor body 14A. The clutch actuator 14 is arranged so that the motor body 14A and the drive shaft 14B extend vertically.

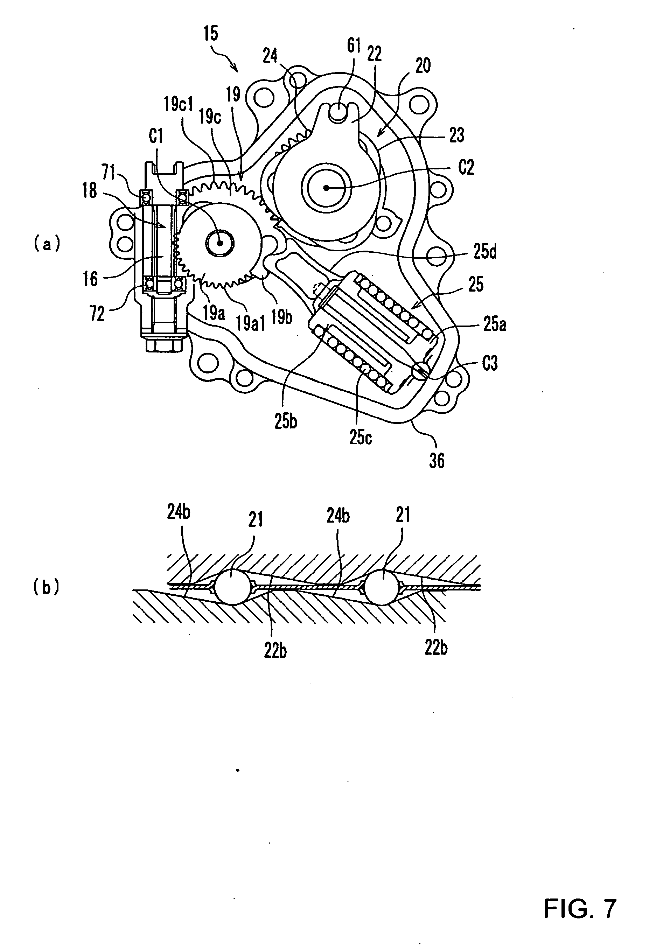

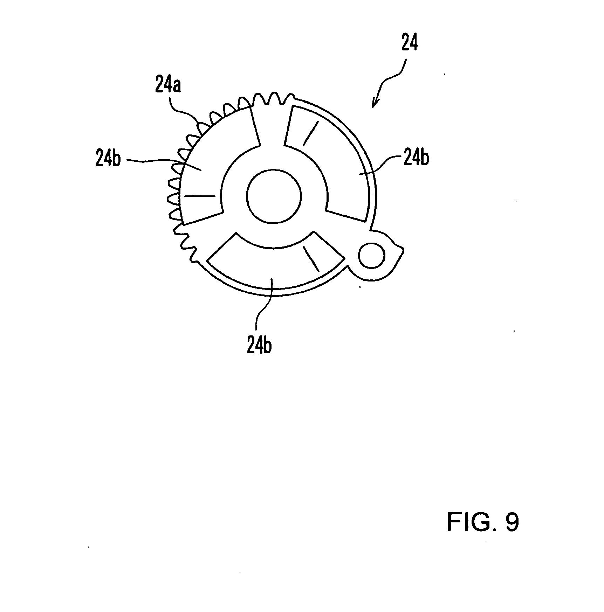

As shown in Fig. 7(a), the actuator force transmission mechanism 15 includes a worm shaft 16 connected to the drive shaft 14B of the clutch actuator 14, a first solid of revolution 19 engaged with the worm shaft 16, a second solid of revolution 24 (see Fig. 9) engaged with the first solid of revolution 19, and a ball cam 20 for converting torque of the second solid of revolution 24 into a force in an axial direction of the slide shaft 455. As will be described later, in the first embodiment, the second solid of revolution 24 constitutes a part of the ball cam 20. Alternatively, the second solid of revolution 24 may be separately provided from the ball cam 20.

The worm shaft 16 extends vertically. A spiral groove is formed on an outer peripheral surface of the worm shaft 16. The worm shaft 16 is rotatably supported by bearings 71 and 72. In the first embodiment, the drive shaft 14B of the clutch actuator 14 is separately provided from the worm shaft 16. Alternatively, the drive shaft 14B and the worm shaft 16 may be provided integrally.

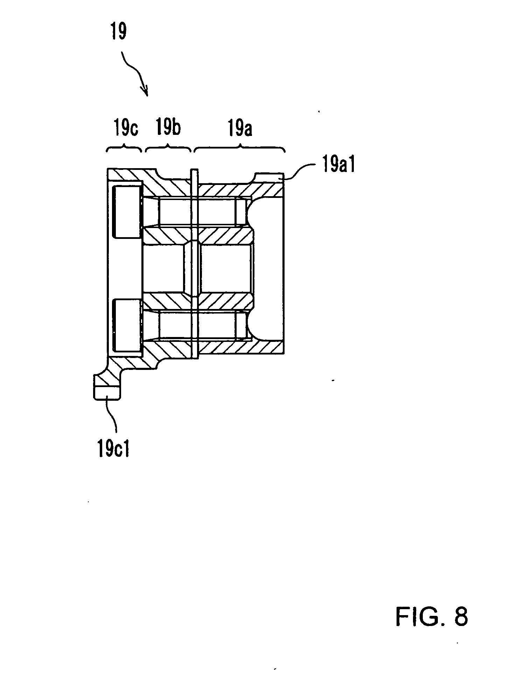

As shown in Figs. 7 (a) and 8, the first solid of revolution 19 includes a worm wheel portion 19a, a cam portion 19b, and a gear portion 19c in order from right to left (from front side to rear side of a sheet of Fig. 7(a)). As shown in Fig. 7(a), teeth 19a1 are formed on a part of an outer periphery of the worm wheel portion 19a. The worm wheel portion 19a is engaged with the worm shaft 16. Due to this, torque of the worm shaft 16 is transmitted to the worm wheel portion 19a and the first solid of revolution 19 rotates according to the worm shaft 16. The worm shaft 16 and the worm wheel portion 19a of the first solid of revolution 19 constitute a worm gear 18.

The cam portion 19b of the first solid of revolution 19 is a portion in contact with an abutment portion 25d of an assist spring unit 25 to be described later.

Teeth 19c1 are formed on the gear portion 19c of the first solid of revolution 19. A radius of the gear portion 19c (to be strict, a distance from a rotation center C1 of the first solid of revolution 19 to the teeth 19c1) is larger than a radius of the worm wheel portion 19a (to be strict, a distance from the rotation center C1 of the first solid of revolution 19 to the teeth 19a1). However, the magnitude relationship between the radius of the gear portion 19c and that of the worm wheel portion 19a may be reversed. In another alternative, the radius of the gear portion 19c and that of the worm wheel portion 19a may be equal to each other.

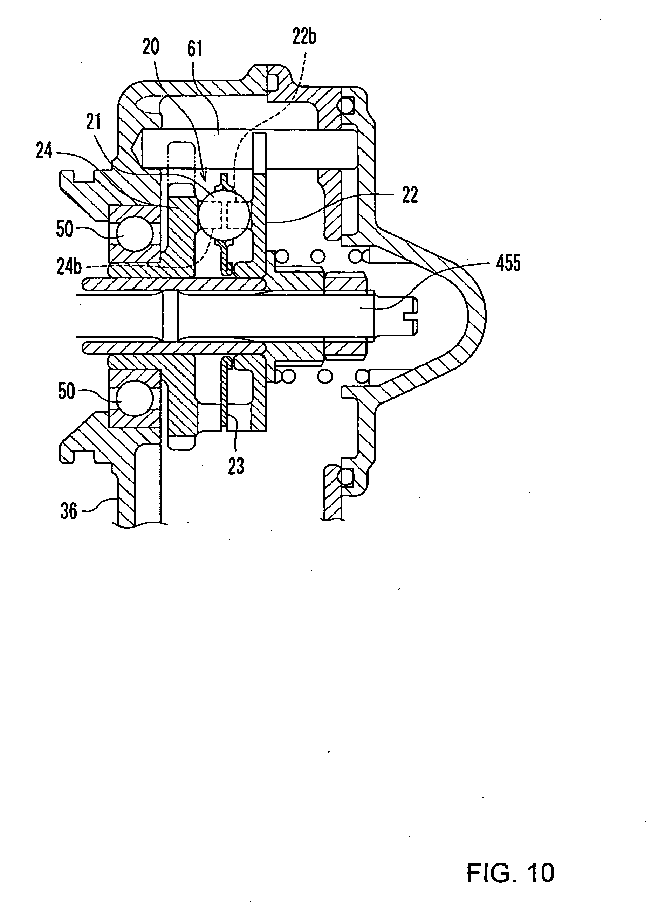

As shown in Figs. 7(a) and 10, the ball cam 20 includes a cam plate 22, a ball plate 23, and the second solid of revolution 24 in order from right to left (from front side to rear side of the sheet of Fig. 7(a)).

The cam plate 22 is fixed to the slide shaft 455 and movable in the axial direction of the slide shaft 455 in an integral fashion with the slide shaft 455. However, rotation of the cam plate 22 around the slide shaft 455 is restricted by a stopper pin 61.

The ball plate 23 rollably supports three balls 21 arranged equidistantly in a circumferential direction. The number of balls 21 is not limited to three.

As shown in Fig. 10, the second solid of revolution 24 is supported by bearings 50 to be rotatable about the slide shaft 455. On the other hand, the second solid of revolution 24 is configured not to move in the axial direction of the slide shaft 455. As shown in Fig. 9, teeth 24a are formed on the second solid of revolution 24. The teeth 24a are engaged with the teeth 19c1 of the gear portion 19c of the first solid of revolution 19 (see Fig. 7 (a)). Due to this, the first solid of revolution 19 is geared with the second solid of revolution 24 via the teeth 19c1 and 24a, thereby transmitting torque of the first solid of revolution 19 to the second solid of revolution 24.

Cam grooves 22b and 24b inclined peripherally are formed on a left surface (lower surface in Fig. 7(a)) of the cam plate 22 and a right surface (an upper surface in Figs. 7(a) and 9) of the second solid of revolution 24, respectively (see also Fig. 7(b)). In this way, in the first embodiment, the second solid of revolution 24 also functions as a cam plate. When the second solid of revolution 24 rotates, relative positions of the cam groove 22b of the cam plate 22 and the cam groove 24b of the second solid of revolution 24 are deviated and the balls 21 are stuck on the camgrooves 22b and 24b. As a result, the cam plate 22 is pressed rightward by the balls 21 and slides rightward. Accordingly, the slide shaft 455 slides rightward and the pressure plate 451 moves rightward. As a result, the state of the clutch 11 is changed over from the engagement state to the disengagement state.

As shown in Fig. 7(a), in the first embodiment, the assist spring unit 25 that generates an assisting force for assisting in disengaging the clutch 11 is provided in the actuation force transmission mechanism 15. The assist spring unit 25 includes a substantially cylindrical first holder 25a, a substantially cylindrical second holder 25b assembled with the first holder 25a, a compression coil spring 25c arranged between the first holder 25a and the second holder 25b, and the abutment portion 25d provided on a tip end of the second holder 25b. The abutment portion 25d abuts on the above-stated cam portion 19b of the first solid of revolution 19. The first holder 25a and the second holder 25b are urged in a direction away from each other by the compression coil spring 25c. By causing the compression coil spring 25c to urge the second holder 25b toward the abutment portion 25d, a force of pressing the abutment portion 25d to the cam portion 19b of the first solid of revolution 19 is applied to the abutment portion 25d. The abutment portion 25d is thereby connected to the cam portion 19b without using any fastening tool such as a bolt.

A root of the first holder 25a is pivotally supported by the crankcase 36. Due to this, the assist spring unit 25 is configured to be pivotal about a pivotal center C3.

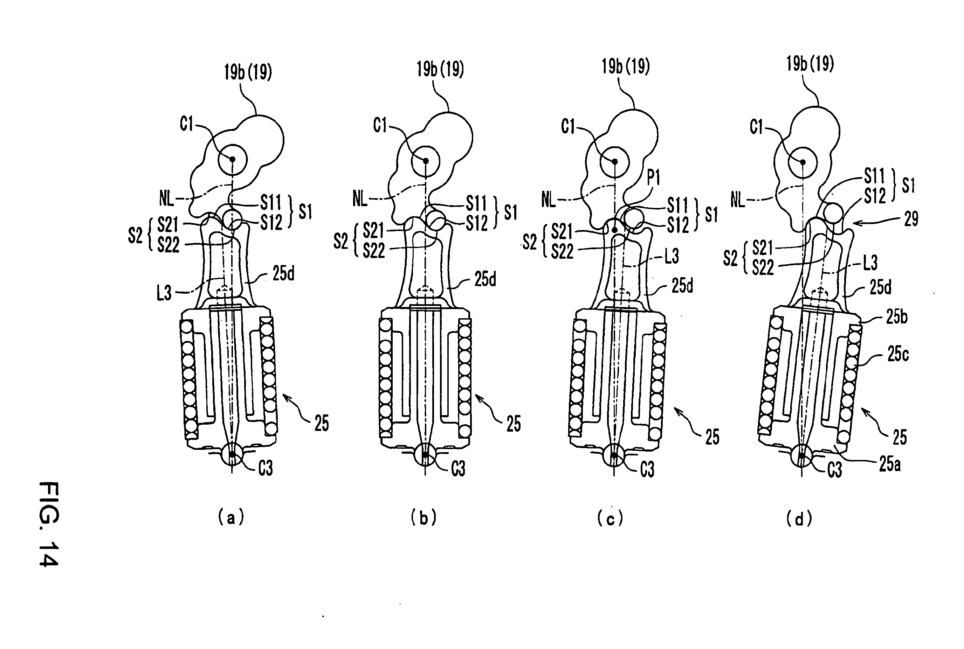

Figs. 14(a) to 14(d) are enlarged views of the assist spring unit 25 and the cam portion 19b of the first solid of revolution 19. The abutment portion 25d of the assist spring unit 25 has a first abutment surface S1 that is a curved surface. The first abutment surface S1 includes a first convex abutment surface S11 convex toward the first solid of revolution 19 and a first concave abutment surface S12 concave toward the first solid of revolution 19. The cam surface 19b of the first solid of revolution 19 has a second abutment surface S2 abutting on the first abutment surface S1 of the abutment portion 25d. The second abutment surface S2 includes a second convex abutment surface S22 convex toward the abutment portion 25d and a second concave abutment surface S21 concave toward the abutment portion 25d. As will be described later, in an allowance area, the first convex abutment surface S11 abuts on the second concave abutment surface S21 according to rotation of the first solid of revolution 19. Thereafter, the first concave abutment surface S12 abuts on the second convex abutment surface S22. Reference symbol 29 denotes an abutment structure in which the cam portion 19b of the first solid of revolution 19 abuts on the abutment portion 25d of the assist spring unit 25. In the first embodiment, the abutment structure 29 is formed by the first abutment surface S1 of the abutment portion 25d and the second abutment surface S2 of the cam portion 19b.

### <SHIFT CHANGE OPERATION>

Shift change operation in the motorcycle 1 is performed as follows. First, the rider 100 operates the automatic transmission operating switch 136 or 137. In response to the rider's operation, a controller (not shown) of the motorcycle 1 controls the clutch actuator 14 and the shift actuator 70 to execute a series of operations of disengagement of the clutch 11, changeover of the transmission gears of the transmission 43, and engagement of the clutch 11.

Operation performed by the clutch actuator 14 for disengaging and engaging the clutch 11 will be described.

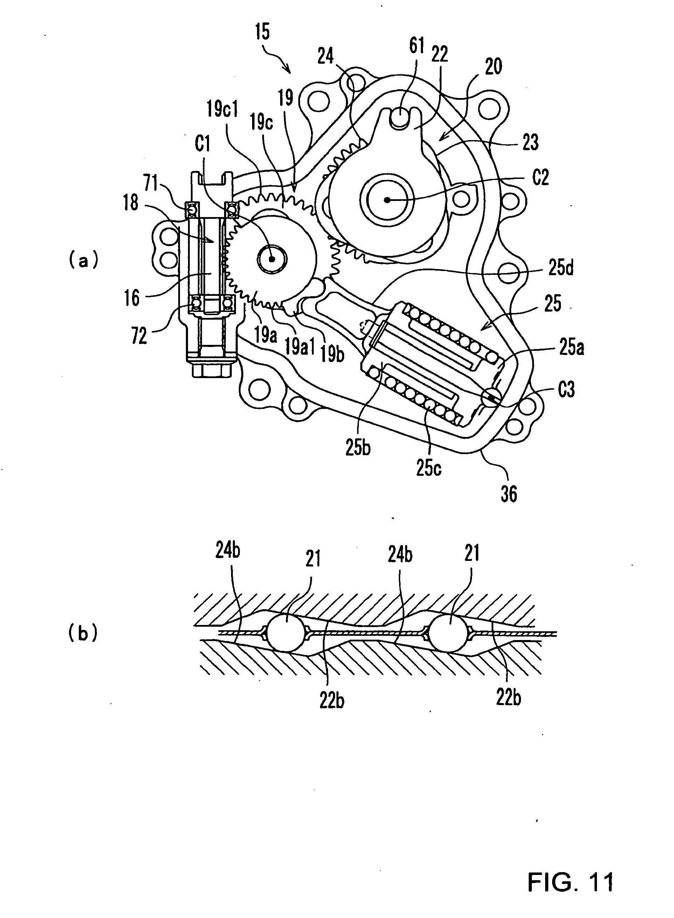

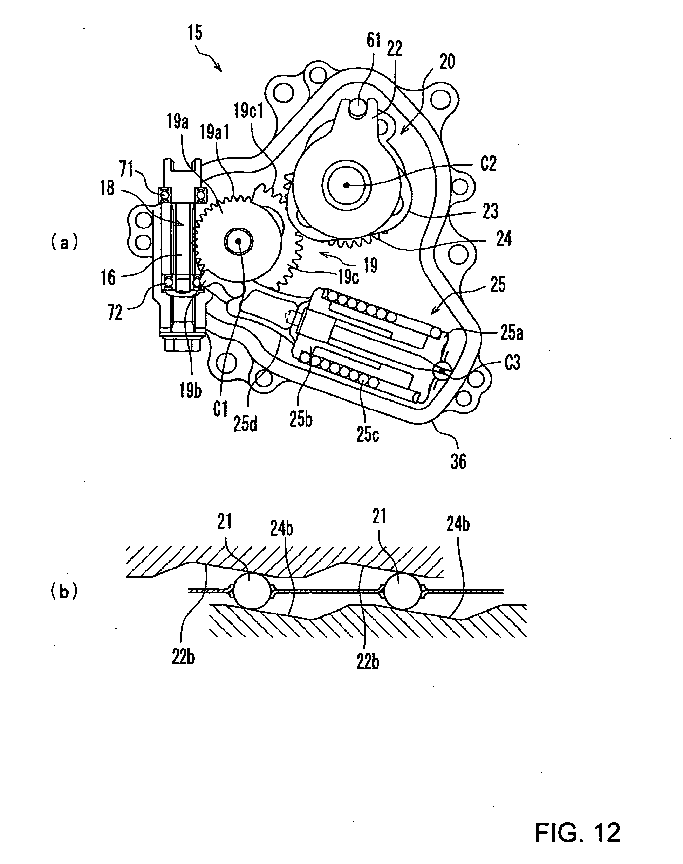

Figs. 7(a), 11(a), and 12(a) are side views of the actuation force transmission mechanism 15. Fig. 7(a) shows a state in which the clutch 11 is engaged, Fig. 11 (a) shows a state in which the clutch 11 starts to be disengaged, and Fig. 12 (a) shows a state in which the clutch 11 is disengaged.

As shown in Figs. 7 (a) and 11 (a), if the clutch actuator 14 operates and the worm shaft 16 rotates, the first solid of revolution 19 rotates clockwise. Since the first solid of revolution 19 is engaged with the second solid of revolution 24, the second solid of revolution 24 rotates counterclockwise to follow the clockwise rotation of the first solid of revolution 19. An area from a position where the clutch 11 is engaged (position indicated in Fig. 7(a)) to a position where the clutch 11 starts to be disengaged (position indicated in Fig. 11(a), hereinafter, "disengagement start position") is a so-called allowance area, where no heavy load is applied to the clutch actuator 14. At the disengagement start position, the pivotal center C3 of the assist spring unit 25, the abutment position at which the abutment portion 25d of the assist spring unit 25 abuts on the cam portion 19b of the first solid of revolution 19, and the rotation center C1 of the first solid of revolution 19 are aligned. Due to this, an urge force of the assist spring unit 25 does not act as the force for rotating the first solid of revolution 19. That is, the assisting force of the assist spring unit 25 is zero.

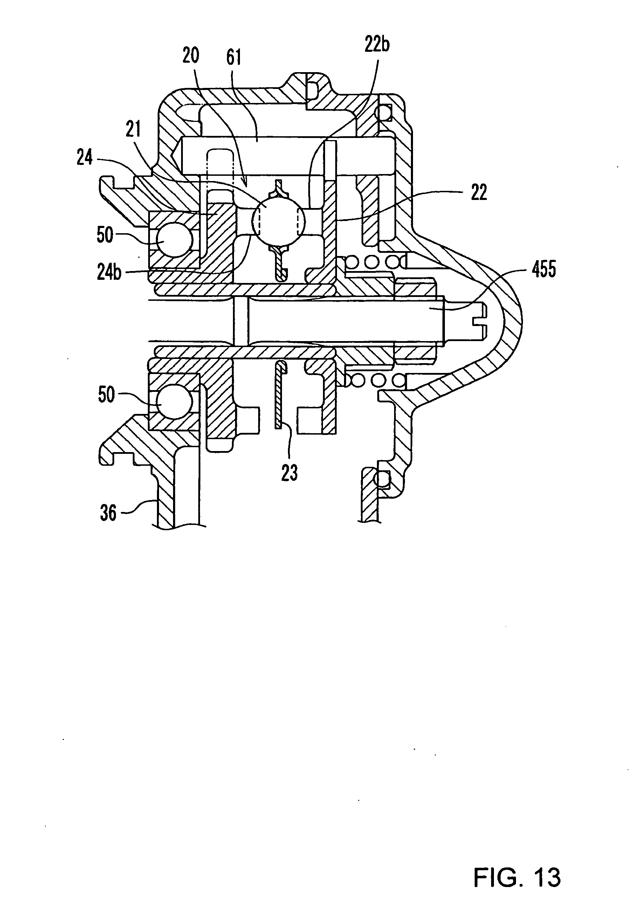

When the worm shaft 16 further rotates from the disengagement start position, the first solid of revolution 19 further rotates clockwise. Moreover, following the rotation of the first solid of revolution 19, the second solid of revolution 24 further rotates counterclockwise. In this state, as shown in Fig. 12(b), the balls 21 of the ball plate 23 of the ball cam 20 are slightly stuck on the cam groove 22b of the cam plate 22 and the cam groove 24b of the second solid of revolution 24. As a result, the cam plate 22 is forced out by the balls 21 in the direction of disengaging the clutch 11. Specifically, the cam plate 22 is pressed toward a right side of the vehicle and moves rightward along with the slide shaft 455 (see Fig. 13). The pressure plate 451 thereby moves rightward to disengage the clutch 11.

As shown in Fig. 12 (a), when the first solid of revolution 19 rotates clockwise past the disengagement start position, the abutment position at which the abutment portion 25d of the assist spring unit 25 abuts on the cam portion 19b of the first solid of revolution 19 is deviated downward of Fig. 12 (a) with respect to a line connecting the pivotal center C3 of the assist spring unit 25 to the rotation center C1 of the first solid of revolution 19. Due to this, the urge force of the assist spring unit 25 acts as the force for rotating the first solid of revolution 19 clockwise, that is, as the assisting force for disengaging the clutch 11. The load on the clutch actuator 14 is thereby lessened.

The operation when the clutch 11 is disengaged has been described so far. When the clutch 11 in a disengagement state is to be engaged, the opposite operation to the above-stated operation is performed.

A manner of abutment of the first solid of revolution 19 on the assist spring unit 25, that is, how the cam portion 19b of the first solid of revolution 19 abuts on the abutment portion 25d of the assist spring unit 25 will next be described in detail.

As already mentioned, Figs. 14 (a) to 14 (d) are front views showing the manner of abutment of the cam portion 19b of the first solid of revolution 19 on the assist spring unit 25 (it is to be noted that Figs. 14 (a) to 14 (d) are side views of the vehicle body). Figs. 14(a) to 14(d) show states from a state of disengaging the clutch 11 to a state of engaging the clutch 11 in order. Conversely, if the clutch 11 in an engagement state is to be disengaged, states of the cam portion 19b and the assist spring unit 25 change in order of Figs. 14 (d) → 14 (c) → 14 (b) → 14(a).

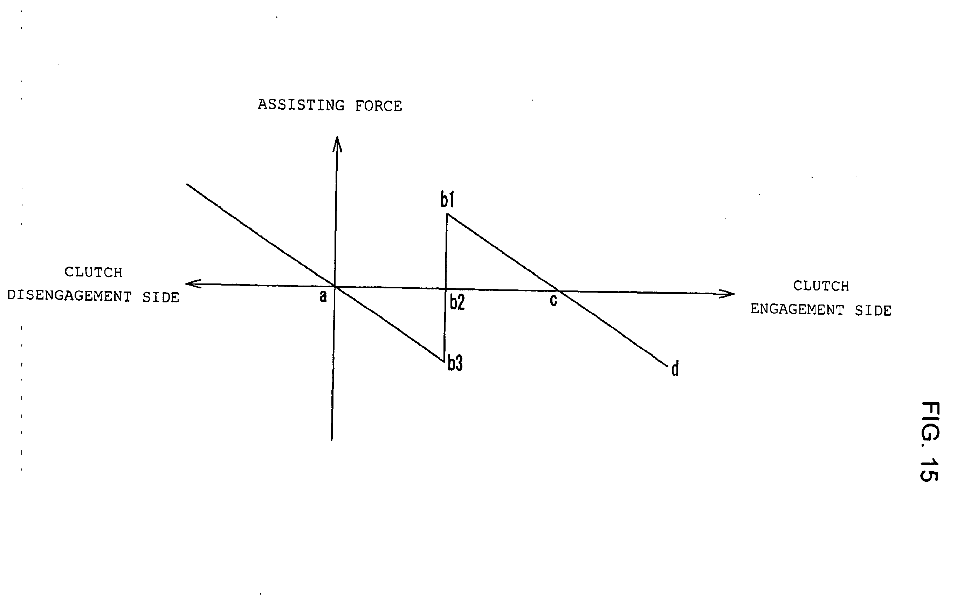

Fig. 15 shows a change in the assisting force transmitted from the assist spring unit 25 to the cam portion 19b. In the present specification, an assisting force acting in the direction of disengaging the clutch 11 will be referred to as "forward assisting force" whereas an assisting force acting in the direction of engaging the clutch 11 will be referred to as "reverse assisting force". In Fig. 15, the forward assisting force is indicated by symbol "+" and the reverse assisting force is indicated by symbol "-". It is to be noted that the assisting force of the assist spring unit 25 is zero when the clutch 11 is at the disengagement start position (or meet point).

In the following description, the line connecting the pivotal center C3 of the assist spring unit 25 to the rotation center C1 of the first solid of revolution 19 is referred to as "neutral line NL". When a direction of the force acted on the cam portion 19b by the assist spring unit 25 (to be strict, direction of the force in a direction extending from the pivotal center C3 toward the cam portion 19b, which shall apply hereafter) coincides with the neutral line NL, the assisting force of the assist spring unit 25 is zero. On the other hand, if the direction of the force acted on the cam portion 19b by the assist spring unit 25 is inclined rightward of the neutral line NL, the assisting force of the assist spring unit 25 is the reverse assisting force. Conversely, if the direction of the force acted on the cam portion 19b by the assist spring unit 25 is inclined leftward of the neutral line NL, the assisting force of the assist spring unit 25 is the forward assisting force.

First, as shown in Fig. 14(d), in the state in which the clutch 11 is engaged, the first convex abutment surface S11 of the abutment portion 25d abuts on the second concave abutment surface S21 of the cam portion 19b. In this state, the direction of the force acted on the cam portion 19b by the assist spring unit 25 is inclined rightward of the neutral line NL and the assisting force of the assist spring unit 25 is the reverse assisting force.

If the clutch actuator 14 drives the clutch 11 to change the state of the clutch 11 from the engagement state to the disengagement state, the first solid of revolution 19 rotates clockwise. At this time, the first convex abutment surface S11 of the abutment portion 25d continuously abuts on the second concave abutment surface S21 of the cam portion 19b but the abutment position moves toward the first concave abutment surface S12 and the second convex abutment surface S22. As a result, the direction of the force acted on the cam portion 19b by the assist spring unit 25 moves toward the neutral line NL and the reverse assisting force of the assist spring unit 25 gradually weakens (see a point d → a point c in Fig. 15).

As shown in Fig. 14(c), when the direction of the force acted on the cam portion 19b by the assist spring unit 25 coincides with the neutral line NL, the assisting force of the assist spring unit 25 becomes zero (see the point c in Fig. 15). At this time, a center P1 of the first convex abutment surface S11 of the abutment portion 25d is located on the neutral line NL.

Thereafter, when the first solid of revolution 19 further rotates clockwise, the abutment position further moves toward the first concave abutment surface S12 and the second convex abutment surface S22. Accordingly, the direction of the force acted on the cam portion 19b by the assist spring unit 25 is inclined leftward of the neutral line NL and degree of the inclination gradually increases. As a result, the assisting force of the assist spring unit 25 becomes the forward assisting force and the forward assisting force gradually increases (see the point c → a point b1 in Fig. 15).

When the first solid of revolution 19 further rotates clockwise, the first convex abutment surface S11 of the abutment portion 25d abuts on the second concave abutment surface S21 of the cam portion 19b and the first concave abutment surface S12 of the abutment portion 25d abuts on the second convex abutment surface S22 of the cam portion 19b eventually as shown in Fig. 14(b). In this state, the direction of the assisting force acted on the cam portion 19b by the assist spring unit 25 discontinuously changes from the position where the direction is inclined leftward of the neutral line NL to the position where the direction coincides with the neutral line NL. As a result, the assisting force of the assist spring unit 25 instantaneously changes from the forward assisting force to zero (see the point b1 → a point b2 in Fig. 15).

When the first solid of revolution 19 rotates clockwise from the state shown in Fig. 14(b), the first concave abutment surface S12 of the abutment portion 25d continuously abuts on the second convex abutment surface S22 of the cam portion 19b but the first convex abutment surface S11 of the abutment portion 25d separates from the second concave abutment surface S21 of the cam portion 19b. In this state, the direction of the assisting force acted on the cam portion 19b by the assist spring unit 25 discontinuously changes from the position where the direction coincides with the neutral line NL to the position where the direction is inclined rightward of the neutral line NL. As a result, the assisting force of the assist spring unit 25 instantaneously changes from zero to the reverse assisting force (see the point b2 → a point b3 in Fig. 15).

Thereafter, when the first solid of revolution 19 further rotates clockwise, the first concave abutment surface S12 of the abutment portion 25d continuously abuts on the second convex abutment surface S22 of the cam portion 19b but the abutment position moves in a direction away from the first convex abutment surface S11 and the second concave abutment surface S21. As a result, the direction of the force acted on the cam portion 19b by the assist spring unit 25 moves toward the neutral line NL and the reverse assisting force of the assist spring unit 25 gradually weakens (see the point b3 → a point a in Fig. 15).

As shown in Fig. 14(a), at the disengagement start position (=meet point), the direction of the force acted on the cam portion 19 by the assist spring unit 25 coincides with the neutral line NL and the assisting force of the assist spring unit 25 becomes zero (see the point a in Fig. 15).

The manner of abutment of the assist spring unit 25 on the first solid of revolution 19 when the clutch 11 is disengaged changes as stated above. A change in the manner of the abutment when the clutch 11 in the disengagement state is engaged is opposite to the above-stated change.

As stated so far, according to the first embodiment, the abutment structure 29 in which the assist spring unit 25 abuts on the first solid of revolution 19 is configured so that the assisting force of the assist spring unit 25 does not act in the direction of rotating the first solid of revolution 19 at the positions b2 and c in the allowance area as shown in Fig. 15. Due to this, as compared with the conventional technique with which the reverse assisting force is generated in the entire allowance area, the reverse assisting force in the allowance area can be suppressed to be low in average. Therefore, it is possible to suppress the reverse assisting force in the allowance area without providing the canceling spring or the like and to lessen the load on the clutch actuator 14.

Furthermore, according to the first embodiment, the area in which the assisting force of the assist spring unit 25 is the reverse assisting force, that is, a reverse assist area and an area in which the assisting force of the assist spring unit 25 is the forward assisting force, that is, a forward assist area are mixed in the allowance area as shown in Fig. 15. Due to this, in the allowance area as a whole, the forward assisting force in the forward assist area cancels the reverse assisting force in the reverse assist area to some extent, thereby making it possible to suppress the reverse assisting force in the allowance area in average.

According to the first embodiment, the assisting force changes in a complicated fashion in the allowance area (see Fig. 15). Due to this, providing that the vehicle 1 is a vehicle including the clutch 11 manually operated using a clutch lever or the like, the change in the assisting force is transmitted to the rider via the clutch lever or the like, possibly impairing rider's operation feeling. According to the first embodiment, by contrast, the clutch 11 is driven by the clutch actuator 14. Due to this, the problem of impairing the rider's operation feeling does not occur.

According to the first embodiment, the abutment structure 29 of abutment of the assist spring unit 25 on the first solid of revolution 19 has the first abutment surface S1 that is the curved surface formed on the abutment portion 25d of the assist spring unit 25 and the second abutment surface S2 that is the curved surface formed on the cam portion 19b of the first solid of revolution 19. Due to this, the abutment structure 29 that exhibits the above-stated functions and advantages can be realized by relatively simple configuration. While both the first abutment surface S1 and the second abutment surface S2 are curved surfaces in the first embodiment, they may be bent surfaces.

Moreover, according to the first embodiment, the first abutment surface S1 includes the first convex abutment surface S11 and the first concave abutment surface S12, and the second abutment surface S2 includes the second concave abutment surface S21 and the second convex abutment surface S22. When the first solid of revolution 19 rotates clockwise while the first convex abutment surface S11 abuts on the second concave abutment surface S21, the assisting force of the assist spring unit 25 changes from the reverse assisting force to the forward assisting force (see the point d → the point c → the point b1 in Fig. 15). Thereafter, when the first solid of revolution 19 rotates clockwise while the first concave abutment surface S12 abuts on the second convex abutment surface S22, the assisting force of the assist spring unit 25 changes from the forward assisting force to the reverse assisting force (see the point b1 → the point b2 → the point b3 in Fig. 15). According to the first embodiment, the first abutment surface S1 and the second abutment surface S2 exhibiting the above-stated functions and advantages can be realized relatively easily. Furthermore, according to the first embodiment, the convex abutment surface abuts on the concave abutment surface. Due to this, unlike the abutment of the convex abutment surface on the convex abutment surface, sliding between the abutment portion 25d of the assist spring unit 25 and the cam portion 19b of the first solid of revolution 19 is unlikely to occur. This makes it unlikely to generate deviations in the positions of the abutment portion 25d and the cam portion 19b relatively to each other, thereby making it possible to stably attain the above-stated functions and advantages.

Furthermore, according to the first embodiment, as shown in Figs. 14(a) to 14(d), from viewpoint of the rotation axis direction of the first solid of revolution 19, an extension line L3 extending from the pivotal center C3 of the assist spring unit 25 in an extension/compression direction of the compression coil spring 25c moves from one side to the other side across the neutral lie NL in the allowance area.

In this case, when a direction of a reactive force which the assist spring unit 25 receives from the first solid of revolution 19 coincides with the extension line L3, such a force as to bend the assist spring unit 25, that is, such a force as to strike the first holder 25a and the second holder 25b against each other is not generated. However, when the direction of the reactive force does not coincide with the extension line L3, the force for bending the assist spring unit 25 is generated. In a clutch drive device 90 according to the first embodiment, the abutment position where the assist spring unit 25 abuts on the first solid of revolution 19 changes in a complicated fashion. Accordingly, such a bending force inherently tends to occur. Nevertheless, according to the first embodiment, the extension line L3 moves from one side to the other side across the neutral line NL in the allowance area, resulting in changes in the direction of the bending force acting on the assist spring unit 25. Due to this, in the allowance area as a whole, an average bending force is small as compared in the instance in which the bending force acts only in one direction in the entire allowance area. As a result, the assist spring unit 25 operates smoothly. In addition, durability of the assist spring unit 25 improves.

Moreover, according to the first embodiment, the first abutment surface S1 of the abutment portion 25d of the assist spring unit 25 and the second abutment surface S2 of the cam portion 19b of the first solid of revolution 19 are formed into curved surfaces so as not to generate the friction force at the time of abutment. As a result, the clutch drive device 90 operates more smoothly.

In the first embodiment, the reverse assist area and the forward assist area are mixed in the allowance area. In a second embodiment to be described hereinafter, an assisting force of an assist spring unit 25 is zero in an entire allowance area. Since the second embodiment is similar to the first embodiment in terms of configuration except for a configuration of an abutment structure 29, only the abutment structure 29 will be described.

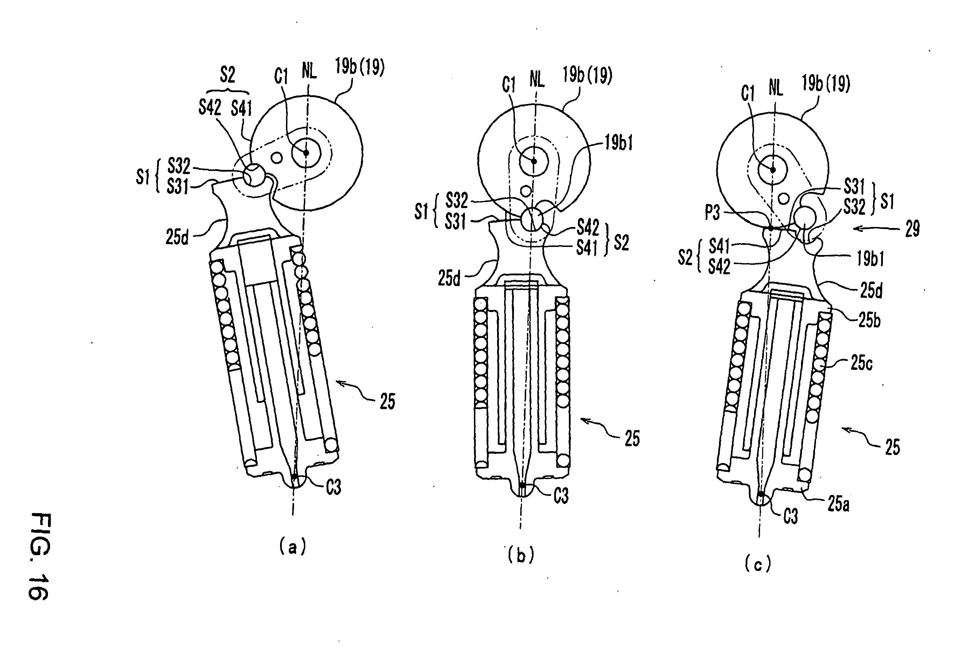

Figs. 16 (a) to 16(c) are front views showing the abutment structure 29 in which the assist spring unit 25 abuts on a cam portion 19b of a first solid of revolution 19 according to the second embodiment. If a clutch 11 in an engagement state is to be disengaged, states of the cam portion 19b and the assist spring unit 25 change in order of Figs. 16(c) → 16(b) → 16(a).

In the second embodiment, a first abutment surface S1 of an abutment portion 25d of the assist spring unit 25 has a flat and smooth surface S31 and a concave arcuate-shaped surface S32. The cam portion 19b of the first solid of revolution 19 has a large arcuate-shaped surface S41 centering around a rotation center C1 and a small arcuate-shaped surface S42 constituting a part of a side surface of a cylindrical member 19b1.

As shown in Fig. 16(c), if the clutch 11 is in the engagement state, the flat and smooth surface S31 of the abutment portion 25d abuts on the large arcuate-shaped surface S41 of the cam portion 19b. If a clutch actuator 14 drives the clutch 11 to change the state from the engagement state toward a disengagement state, the first solid of revolution 19 rotates clockwise. At this time, the flat and smooth surface S31 of the abutment portion 25d continuously abuts on the large arcuate-shaped surface S41 of the cam portion 19b and an abutment position P3 where the flat and smooth surface S31 abuts on the large arcuate-shaped surface S41 is always located on a neutral line NL. Due to this, the assisting force of the assist spring unit 25 does not act as a force for rotating the first solid of revolution 19 and becomes zero.

Thereafter, if the first solid of revolution 19 further rotates clockwise, the first solid of revolution 19 eventually reaches a disengagement start position as shown in Fig. 16 (b) . Further, the flat and smooth surface S31 of the abutment portion 25d separates from the large arcuate-shaped surface S41 of the cam portion 19b and, instead, the arcuate-shaped surface S32 of the abutment portion 25d abuts on the small arcuate-shaped surface S42 of the cam portion 19b. It is to be noted that even at this disengagement start position, a direction of a force acted on the cam portion 19b by the assist spring unit 25 coincides with the neutral line NL. Due to this, the assisting force of the assist spring unit 25 remains zero.

If the first solid of revolution 19 exceeds the disengagement start position and further rotates clockwise as shown in Fig. 16(a), the arcuate-shaped surface S32 of the abutment portion 25d continuously abuts on the small arcuate-shaped surface S42 of the cam portion 19b but the direction of the force acted on the cam portion 19b by the assist spring unit 25 is inclined leftward of the neutral line NL. As a result, the assisting force of the assist spring unit 25 becomes a forward assisting force for urging the first solid of revolution 19 clockwise. That is, the assist spring unit 25 assists the clutch actuator 14 in disengaging the clutch 11.

As stated so far, according to the second embodiment, the assisting force of the assist spring unit 25 is zero in the entire allowance area (that is, all areas from Figs. 16 (c) to 16(b)). Therefore, it is possible to prevent the reverse assisting force in the allowance area from occurring without providing a canceling spring or the like.

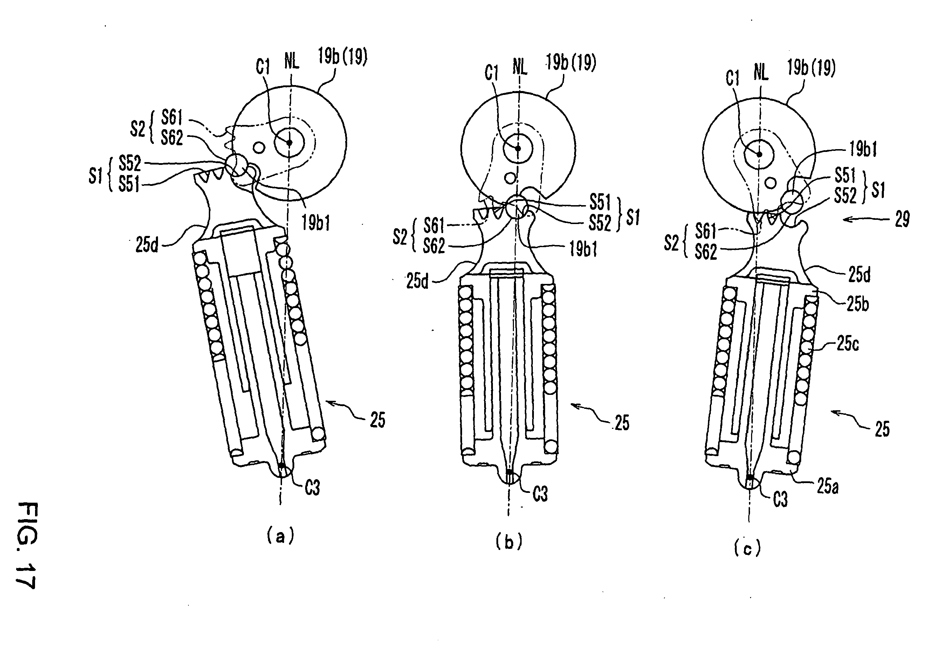

A specific configuration of the abutment structure 29 that makes the assisting force of the assist spring unit 25 zero in the entire allowance area is not limited to that according to the second embodiment. For example, the abutment structure 29 may be configured as shown in Figs. 17(a) to 17(c).

In a third embodiment of the present invention, a first abutment surface S1 of an abutment portion 25d of an assist spring unit 25 has a tooth surface S51 on which a plurality of teeth are formed and a concave arcuate-shaped surface S52. On the other hand, a cam portion 19b of a first solid of revolution 19 has a tooth surface S61 engaged with the tooth surface S51 and a small arcuate-shaped surface S62 constituting a part of a side surface of a cylindrical member 19b1.

As shown in Fig. 17 (c), if a clutch 11 is in an engagement state, the tooth surface S51 of the abutment portion 25d abuts on the tooth surface S61 of the cam portion 19b. In other words, the tooth surface S51 of the abutment portion 25d is engaged with the tooth surface S61 of the cam portion 19b. If a clutch actuator 14 drives the clutch 11 to change the state from the engagement state toward a disengagement state, the first solid of revolution 19 rotates clockwise. At this time, a direction of an assisting force acted on the cam portion 19b by the assist spring unit 25 always coincides with a neural line NL. Due to this, the assisting force of the assist spring unit 25 does not act as a force for rotating the first solid of revolution 19 and becomes zero.

Thereafter, if the first solid of revolution 19 further rotates clockwise, the first solid of revolution 19 eventually reaches a disengagement start position as shown in Fig. 17(b). Further, the tooth surface S51 of the abutment portion 25d separates from the tooth surface S61 of the cam portion 19b and, instead, the arcuate-shaped surface S52 of the abutment portion 25d abuts on the small arcuate-shaped surface S62 of the cam portion 19b. It is to be noted that even at this disengagement start position, the direction of the force acted on the cam portion 19b by the assist spring unit 25 coincides with the neutral line NL. Due to this, the assisting force of the assist spring unit 25 remains zero.

If the first solid of revolution 19 exceeds the disengagement start position and further rotates clockwise as shown in Fig. 17(a), the arcuate-shaped surface S52 of the abutment portion 25d continuously abuts on the small arcuate-shaped surface S62 of the cam portion 19b but the direction of the force acted on the cam portion 19b by the assist spring unit 25 is inclined leftward of the neutral line NL. As a result, the assisting force of the assist spring unit 25 becomes a forward assisting force for urging the first solid of revolution 19 clockwise. That is, the assist spring unit 25 assists the clutch actuator 14 in disengaging the clutch 11.

As stated so far, according to the third embodiment, the assisting force of the assist spring unit 25 is zero in the entire allowance area (that is, all areas from Figs. 17 (c) to 17(b)). Therefore, it is possible to prevent the reverse assisting force in the allowance area from occurring without providing a canceling spring or the like.

In the first to third embodiments, an auxiliary elastic body is the assist spring unit 25 including the compression coil spring 25c. Alternatively, the auxiliary elastic body may include a spring other than the compression coil spring 25c. Further, the auxiliary elastic body may include an elastic member (such as a rubber) other than the spring.

In the first to third embodiments, the vehicle mounting therein the clutch drive device 90 according to the present invention is the motorcycle 1. However, the vehicle according to the present invention is not limited to the motorcycle 1 but may be another straddle-type vehicle such as an ATV. Furthermore, the vehicle according to the present invention may be a vehicle other than the straddle-type vehicle.

In the first to third embodiments, the number of solids of revolution of the actuation force transmission mechanism 15 is two, that is, the actuation force transmission mechanism 15 includes the first solid of revolution 19 and the second solid of revolution 24. However, the number of solids of revolution of the actuation force transmission mechanism 15 may be one or three or more.

As stated so far, the present invention is suitably used for a clutch drive device and a vehicle including the clutch drive device.

### Description of Reference Numerals

- 1: Motorcycle (vehicle)
- 11: Clutch
- 14: Clutch Actuator (actuator)
- 15: Actuation force transmission mechanism
- 16: Worm shaft
- 19: First solid of revolution (solid of revolution)
- 19a: Worm wheel portion
- 19b: Cam portion
- 19c: Gear portion
- 20: Ball cam (force direction conversion mechanism)
- 24: Second solid of revolution
- 25: Assist spring unit (auxiliary elastic body)
- 25a: First holder (holder)
- 25b: Second holder (holder)
- 25c: Compression coil spring (elastic member)
- 25d: Abutment portion
- 29: Abutment structure
- 35: Power Unit
- 90: Clutch drive device
- 455: Slide shaft
- C1: Rotation center of first solid of revolution
- C2: Rotation center of second solid of revolution
- C3: Pivotal center of assist spring unit
- S1: First abutment surface
- S2: Second abutment surface
- S11: First convex abutment surface
- S12: First concave abutment surface
- S21: Second concave abutment surface
- S22: Second convex abutment surface
- NL: Neutral line
- L3: Extension line

## Claims

1. A clutch drive device (90) comprising:
a clutch (11);
an actuator (14) that generates a drive force for engaging or disengaging the clutch (11);
an actuation force transmission mechanism (15) including a solid of revolution (19) rotating in a first direction when the clutch (11) is disengaged and rotating in a second direction when the clutch (11) is engaged, the actuation force transmission mechanism (15) transmitting the drive force of the actuator (14) to the clutch (11) to follow rotation of the solid of revolution (19); and
an auxiliary elastic body (25) having one end (C3) pivotally supported, the auxiliary elastic body (25) urging the solid of revolution (19) in a direction of disengaging the clutch (11) while a state of the clutch (11) further changes to a disengagement state after the clutch (11) starts to be disengaged,
**characterized in that:**
the other end (25d) of the auxiliary elastic body (25) abuts on the solid of revolution (19); and
an abutment structure (29) in which the solid of revolution (19) abuts on the auxiliary elastic body (25) is configured so that an urge force of the auxiliary elastic body (25) does not act in a direction of rotating the solid of revolution (19) at least at one position in an allowance area in which the clutch (11) is not disengaged even if the solid of revolution (19) rotates.

2. The clutch drive device (90) according to claim 1,
wherein the abutment structure (29) in which the solid of revolution (19) abuts on the auxiliary elastic body (25) is configured so that the allowance area in which the clutch (11) is not disengaged even if the solid of revolution (19) rotates includes a reverse assist area in which the urge force of the auxiliary elastic body (25) acts in a direction of rotating the solid of revolution (19) in the second direction and a forward assist area in which the urge force of the auxiliary elastic body (25) acts in a direction of rotating the solid of revolution (19) in the first direction.

3. The clutch drive device (90) according to claim 2,
wherein the abutment structure (29) has a first abutment surface (S1) formed by a curved surface or a bent surface formed on the other end (25d) of the auxiliary elastic body (25) and a second abutment surface (S2) formed by a curved surface or a bent surface formed on the solid of revolution (19) and abutting on the first abutment surface (S1).

4. The clutch drive device (90) according to claim 3,
wherein the first abutment surface (S1) of the auxiliary elastic body (25) includes a first convex abutment surface (S11) convex toward the solid of revolution (19) and a first concave abutment surface (S12) concave toward the solid of revolution (19),
the second abutment surface (S2) of the solid of revolution (19) includes a second convex abutment surface (S22) convex toward the auxiliary elastic body (25) and a second concave abutment surface (S21) concave toward the auxiliary elastic body (25),
when the solid of revolution (19) rotates in the first direction in the allowance area, the first convex abutment surface (S11) abuts on the second concave abutment surface (S21) and then the first concave abutment surface (S12) abuts on the second convex abutment surface (S22), and
when the solid of revolution (19) rotates in the first direction while the first convex abutment surface (S11) abuts on the second concave abutment surface (S21), the urge force of the auxiliary elastic body (25) changes from a reverse assisting force for urging the solid of revolution (19) in the second direction to a forward assisting force for urging the solid of revolution (19) in the first direction, and thereafter when the solid of revolution (19) rotates in the first direction while the first concave abutment surface (S12) abuts on the second convex abutment surface (S22), the urge force of the auxiliary elastic body (25) changes from the forward assisting force to the reverse assisting force.

5. The clutch drive device (90) according to claim 3 or claim 4,
wherein the auxiliary elastic body (25) includes an extensible elastic member (25c) and an extensible holder (25a, 25b) having the first abutment surface (S1) and holding the extensible elastic member (25c), and
the first abutment surface (S1) and the second abutment surface (S2) are formed so that an extension line (L3) extending from a pivotal center (C3) of the auxiliary elastic body (25) in an extension direction of the extensible elastic member (25c) moves from one side to the other side across a neutral line (NL) connecting the pivotal center (C3) to a rotation center (C1) of the solid of revolution (19) from a viewpoint of a direction of a rotation axis of the solid of revolution (19) while the solid of revolution (19) rotates in the first direction in the allowance area.

6. The clutch drive device (90) according to any one of claims 3 to 5,
wherein the first abutment surface (S1) and the second abutment surface (S2) are formed into curved surfaces (S11, S12, S21, S22) that do not generate a friction force when the first abutment surface (S1) abuts on the second abutment surface (S2) while the solid of revolution (19) rotates in the allowance area.

7. The clutch drive device (90) according to any one of the preceding claims,
wherein the abutment structure (29) in which the solid of revolution (19) abuts on the auxiliary elastic body (25) is configured so that the urge force of the auxiliary elastic body (25) does not act in the direction of rotating the solid of revolution (19) in the entirety of the allowance area in which the clutch (11) is not disengaged even if the solid of revolution (19) rotates.

8. A vehicle (1) comprising the clutch drive device (90) according to any one of claims 1 to 7.

## Patentansprüche

1. Kupplungsantriebsvorrichtung (90) mit:
einer Kupplung (11);
einem Stellantrieb (14), der eine Antriebskraft zum Ein- und Auskuppeln der Kupplung (11) bereitstellt;
einen Stellkraftübertragungsmechanismus (15) mit einem Rotationskörper (19), der sich in einer ersten Richtung dreht, wenn die Kupplung (11) ausgekuppelt ist, und sich in eine zweite Richtung dreht, wenn die Kupplung (11) eingekuppelt ist, wobei der Stellkraftübertragungsmechanismus (15) die Antriebskraft des Stellantriebs (14) auf die Kupplung (11) überträgt, so dass sie der Drehbewegung des Rotationskörpers (19) folgt; und
einem elastischen Hilfskörper (25) mit einem ersten schwenkbar gelagerten Ende (C3) wobei der elastische Hilfskörper (25) den Rotationskörper (19) in eine Auskupplungsrichtung der Kupplung (11) drückt, während die Stellung der Kupplung nach dem Beginn des Auskuppelvorganges sich weiter zu einer ausgekuppelten Stellung hin verändert,
**dadurch gekennzeichnet, dass**
das zweite Ende (25d) des elastischen Hilfskörpers (25) an dem Rotationskörper (19) anliegt, und
ein Widerlageraufbau (29), in welchem der Rotationskörper (19) an dem elastischen Hilfskörper (25) anliegt, derart konfiguriert ist, dass eine Druckkraft des elastischen Hilfskörpers (25), zumindest in einer Position in einem Toleranzbereich, in dem die Kupplung (11) nicht ausgekuppelt wird, selbst wenn sich der Rotationskörper (19) dreht, nicht in der Drehrichtung des Rotationskörpers (19) wirkt.

2. Kupplungsantriebsvorrichtung (90) nach Anspruch 1, wobei der Widerlageraufbau (29), in dem der Rotationskörper (19) an dem elastischen Hilfskörper (25) anliegt, derart konfiguriert ist, dass der Toleranzbereich, in dem die Kupplung (11) nicht ausgekuppelt wird, selbst wenn sich der Rotationskörper (19) dreht, einen Rückschubbereich aufweist, in dem die Druckkraft des elastischen Hilfskörpers (25) eine Drehung des Rotationskörpers (19) in die zweite Drehrichtung bewirkt, und einen Vorschubbereich aufweist, in dem die Druckkraft des elastischen Hilfskörpers (25) eine Drehung des Rotationskörpers (19) in die erste Drehrichtung bewirkt.

3. Kupplungsantriebsvorrichtung (90) nach Anspruch 2, wobei der Widerlageraufbau (29) eine erste Widerlageroberfläche (S1) aufweist, die von einer gekrümmten oder gebogenen Fläche gebildet wird, die an dem zweiten Ende (25d) des elastischen Hilfskörpers (25) ausgebildet ist, und eine zweite Widerlageroberfläche (S2) aufweist, die von einer gekrümmten oder gebogenen Fläche gebildet wird, die an dem Rotationskörper (19) ausgebildet ist und an der ersten Widerlagerfläche (S1) anliegt.

4. Kupplungsantriebsvorrichtung (90) nach Anspruch 3, wobei die erste Widerlageroberfläche (S1) des elastischen Hilfskörpers (25) eine erste, konvexe Widerlageroberfläche (S11) aufweist, die zu dem Rotationskörper (19) hin konvex ist, und eine erste, konkave Widerlageroberfläche (12) aufweist, die zu dem Rotationskörper (19) hin konkav ist,
die zweite Widerlageroberfläche (S2) des Rotationskörpers (19) weist eine zweite, konvexe Widerlageroberfläche (S22),die zu dem elastischen Hilfskörper (25) hin konvex ist, und eine zweite konkave Widerlageroberfläche (S21) auf, die zu dem elastischen Hilfskörper (25) hin Konkav ausgebildet ist,
wobei, wenn der Rotationskörper (19) sich in der ersten Richtung in dem Toleranzbereich dreht, die erste konvexe Widerlageroberfläche (S11) an die zweite konkave Widerlageroberfläche (S21) und dann die erste konkave Widerlageroberfläche (S12) an der zweiten konvexen Widerlageroberfläche (S22) anliegt,
und wenn der Rotationskörper (19) sich in der ersten Richtung dreht, während die erste konvexe Widerlageroberfläche (S11) an der zweiten konkaven Widerlageroberfläche (S21) anliegt, die Druckkraft des elastischen Hilfskörper (25) sich von einer rückstellenden, den Rotationskörper (19) in die zweite Richtung drängenden Kraft in eine vorwärtsstellende, den Rotationskörper (19) in die erste Richtung drängenden Kraft ändert, und sodann wenn der Rotationskörper (19) sich in der ersten Richtung dreht, während die erste konkave Widerlageroberfläche (S12) an die zweite konvexe Widerlageroberfläche (S22) angrenzt, die Druckkraft des elastischen Hilfskörpers (25) sich von einer vorwärtsstellenden Kraft zu einer rückstellenden Kraft ändert.

5. Kupplungsantriebsvorrichtung (90) nach Anspruch 3 oder 4, wobei der elastische Hilfskörper (25) einen ausfahrbaren elastischen Teil (25c) und einen ausfahrbaren Halter (25a, 25b) umfasst, der die erste Widerlageroberfläche (S1) aufweist, und den ausfahrbaren Teil (25c) hält, wobei die erste und die zweite Widerlageroberfläche (S2) so geformt sind, dass eine Verlängerungslinie (L3), die sich von dem Drehzentrum (C3) des elastischen Hilfskörpers (25) in eine Ausfahrrichtung des ausfahrbaren elastischen Teil (25c) erstreckt, sich von einer Seite zu der anderen Seite über eine neutrale Linie (NL) hinweg bewegt, die in Richtung der Drehachse des Rotationskörpers (19) gesehen das Drehzentrum (C3) und das Rotationszentrum (C1) des Rotationskörpers (19) verbindet, wenn der Rotationskörper (19) sich innerhalb des Toleranzbereichs in der ersten Richtung dreht.

6. Kupplungsantriebsvorrichtung (90) nach einem der Ansprüche 3 bis 5, wobei die erste Widerlageroberfläche (S1) und die zweite Widerlageroberfläche (S2) aus gekrümmten Oberflächen (S11, S12, S21, S22) geformt sind, die keine Reibungskräfte erzeugen, wenn die erste Widerlageroberfläche (S1) an der zweiten Widerlageroberfläche (S2) anliegt, während der Rotationskörper (19) sich in dem Toleranzbereich dreht.

7. Kupplungsantriebsvorrichtung (90) nach einem der vorangehenden Ansprüchen, wobei der Widerlageraufbau (29) in der der Rotationskörper (19) an dem elastischen Hilfskörper (25) anliegt, so konfiguriert ist, dass die Druckkraft des elastischen Hilfskörpers (25) nicht in die Drehrichtung des Rotationskörpers (19) wirkt, wenn sich dieser vollumfänglich in dem Toleranzbereich befindet, in dem die Kupplung (11) nicht ausgekuppelt wird, selbst wenn der Rotationskörper (19) sich dreht.

8. Fahrzeug (1), das eine Kupplungsantriebsvorrichtung (90) nach einem der Ansprüche 1 bis 7 aufweist.

## Revendications

1. Dispositif de commande d'embrayage (90) comprenant :
un embrayage (11) ;
un actionneur (14) qui génère une force de commande pour accoupler et désaccoupler l'embrayage (11) ;
un mécanisme de transmission de force d'actionnement (15) incluant un solide de révolution (19) tournant dans une première direction lorsque l'embrayage (11) est désaccouplé et tournant dans une deuxième direction lorsque l'embrayage (11) est accouplé, le mécanisme de transmission de force d'actionnement (15) transmettant la force de commande de l'actionneur (14) à l'embrayage (11) pour suivre la rotation du solide de révolution (19) ; et
un corps élastique auxiliaire (25) ayant une extrémité (C3) supportée de manière pivotante, le corps élastique auxiliaire (25) poussant le solide de révolution (19) dans une direction de désaccouplement de l'embrayage (11), tandis qu'un état de l'embrayage (11) passe à nouveau à un état de désaccouplement une fois que l'embrayage (11) commence à être désaccouplé;
**caractérisé en ce que**
l'autre extrémité (25d) du corps élastique auxiliaire (25) vient buter sur le solide de révolution (19) ; et
une structure de butée (29), dans laquelle le solide de révolution (19) vient buter sur le corps élastique auxiliaire (25), est configurée de façon qu'une force de poussée du corps élastique auxiliaire (25) n'agisse pas dans une direction de rotation du solide de révolution (19) au moins dans une position se trouvant dans une zone de tolérance dans laquelle l'embrayage (11) n'est pas désaccouplé même quand le solide de révolution (19) tourne.

2. Dispositif de commande d'embrayage (90) selon la revendication 1,
dans lequel la structure de butée (29), dans laquelle le solide de révolution (19) vient buter sur le corps élastique auxiliaire (25), est configurée de façon que la zone de tolérance dans laquelle l'embrayage (11) n'est pas désaccouplé même quand le solide de révolution (19) tourne comprenne une zone d'assistance de marche arrière dans laquelle la force de poussée du corps élastique auxiliaire (25) agit dans une direction de rotation du solide de révolution (19) dans la deuxième direction et une zone d'assistance de marche avant dans laquelle la force de poussée du corps élastique auxiliaire (25) agit dans une direction de rotation du solide de révolution (19) dans la première direction.

3. Dispositif de commande d'embrayage (90) selon la revendication 2,
dans lequel la structure de butée (29) a une première surface de butée (S1) formée par une surface incurvée ou une surface courbe formée à l'autre extrémité (25d) du corps élastique auxiliaire (25) et une deuxième surface de butée (S2) formée par une surface incurvée ou une surface courbe formée sur le solide de révolution (19) et butant sur la première surface de butée (S1).

4. Dispositif de commande d'embrayage (90) selon la revendication 3,
dans lequel la première surface de butée (S1) du corps élastique auxiliaire (25) comprend une première surface convexe de butée (S11) convexe en direction du solide de révolution (19) et une première surface concave de butée (S12) concave en direction du solide de révolution (19),
la deuxième surface de butée (S2) du solide de révolution (19) comprend une deuxième surface convexe de butée (S22) convexe en direction du corps élastique auxiliaire (25) et une deuxième surface concave de butée (S21)
concave en direction du corps élastique auxiliaire (25),
lorsque le solide de révolution (19) tourne dans la première direction dans la zone de tolérance, la première surface convexe de butée (S11) bute sur la deuxième surface concave de butée (S21), puis la première surface concave de butée (S12) bute sur la deuxième surface convexe de butée (S22), et
lorsque le solide de révolution (19) tourne dans la première direction, tandis que la première surface convexe de butée (S11) bute sur la deuxième surface concave de butée (S21), la force de poussée du corps élastique auxiliaire (25) passe d'une force d'assistance de marche arrière pour pousser le solide de révolution (19) dans la deuxième direction à une force d'assistance de marche avant pour pousser le solide de révolution (19) dans la première direction, puis quand le solide de révolution (19) tourne dans la première direction tandis que la première surface concave de butée (S 12) bute sur la deuxième surface convexe de butée (S22), la force de poussée du corps élastique auxiliaire (25) passe de la force d'assistance de marche avant à la force d'assistance de marche arrière.

5. Dispositif de commande d'embrayage (90) selon la revendication 3 ou 4,
dans lequel le corps élastique auxiliaire (25) comprend un élément élastique extensible (25c) et un support extensible (25a, 25b) comportant la première surface de butée (S1) et supportant l'élément élastique extensible (25c), et
la première surface de butée (S1) et la deuxième surface de butée (S2) sont formées de sorte qu'une ligne d'extension (L3) s'étendant depuis un centre pivotant (C3) du corps élastique auxiliaire (25) dans une direction d'extension de l'élément élastique extensible (25c) se déplace d'un côté vers l'autre côté en coupant une ligne neutre (NL) reliant le centre pivotant (C3) à un centre de rotation (C1) du solide de révolution (19) vu depuis une direction d'un axe de rotation du solide de révolution (19) tandis que le solide de révolution (19) tourne dans la première direction dans la zone de tolérance.

6. Dispositif de commande d'embrayage (90) selon l'une quelconque des revendications 3 à 5,
dans lequel la première surface de butée (S1) et la deuxième surface de butée (S2) sont formées en surfaces incurvées (S11, S12, S21, S22) qui ne génèrent pas de force de frottement lorsque la première surface de butée (S1) bute sur la deuxième surface de butée (S2) tandis que le solide de révolution (19) tourne dans la zone de tolérance.

7. Dispositif de commande d'embrayage (90) selon l'une quelconque des revendications précédentes,
dans lequel la structure de butée (29), dans laquelle le solide de révolution (19) vient buter sur le corps élastique auxiliaire (25), est configurée de façon que la force de poussée du corps élastique auxiliaire (25) n'agisse pas dans la direction de rotation du solide de révolution (19) dans la totalité de la zone de tolérance dans laquelle l'embrayage (11) n'est pas désaccouplé même quand le solide de révolution (19) tourne.

8. Véhicule (1) comprenant le dispositif de commande d'embrayage (90) selon l'une quelconque des revendications 1 à 7.
